# DEMANDE DE BREVET EUROPEEN

(11) **EP 1 271 937 A1**
(43) Date de publication de la demande: **02.01.2003**
(21) Numéro de dépôt: 02077380.0
(22) Date de dépôt: 14.06.2002
(51) Int. Cl.: H04N 5/38

(54) **Dispositif de réémission isofréquence d'un signal de télévision numérique terrestre**

(30) Priorité: 19.06.2001 FR 0108047
(71) Demandeur: Koninklijke Philips Electronics N.V., 5621 BA Eindhoven (NL)
(72) Inventeur: Chanteau, Pierre, 75008 Paris (FR)
(74) Mandataire: de la Fouchardière, Marie-Noelle

(57) **Abrégé**

L'invention concerne le domaine de la télévision numérique terrestre. Elle concerne plus particulièrement un dispositif de réémission isofréquence d'un signal 10 comprenant au moins un signal numérique et un signal analogique relatifs à des programmes de télévision. Un tel dispositif est utilisé, par exemple, dans un immeuble pour faciliter la réception au niveau des récepteurs portables de signaux numériques. Le dispositif de réémission selon l'invention comprend des moyens de sélection 11 pour conserver la bande de fréquence UHF, des moyens de filtrage 12 pour éliminer certaines fréquences du signal analogique, des moyens d'amplification 13 pour amplifier le signal ainsi filtré et des moyens de réémission 14 pour émettre le signal ainsi amplifié. L'élimination de certaines fréquences du signal analogique permet une réémission isofréquence de ce signal sans perturber la réception au niveau d'un récepteur de signaux analogiques.

## Description

### DOMAINE TECHNIQUE

La présente invention concerne un dispositif de réémission d'un signal comprenant au moins un signal numérique relatif à au moins un programme de télévision numérique terrestre et un signal analogique relatif à au moins un programme de télévision analogique terrestre, ledit signal analogique présentant un spectre comprenant une pluralité de fréquences.
Elle concerne également un dispositif de traitement d'un signal destiné à être utilisé dans un tel dispositif de réémission.
L'invention trouve une application, par exemple, dans un réémetteur domestique (en anglais « gap-filler ») utilisé en télévision numérique terrestre.

### ETAT DE LA TECHNIQUE ANTERIEURE

La norme ETS 300744 publiée par l'ETSI en mars 1997 décrit un système de télévision numérique terrestre DVB-T appliqué, entre autre, en Europe. Un avantage de ce système par rapport à un système de télévision analogique réside dans le fait que deux signaux de même fréquence, représentant une même image, mais déphasés, engendrent une image nette lorsqu'ils sont reçus par un récepteur de signaux numériques, alors qu'en télévision analogique, de tels signaux déphasés engendrent des images fantômes conduisant à une qualité relativement mauvaise de l'image sur un récepteur de signaux analogiques. Cet avantage permet, en télévision numérique, d'effectuer, grâce à un réémetteur, une réémission locale isofréquence d'un signal numérique reçu sur une antenne de réception, afin d'atteindre des récepteurs de signaux numériques situés à une distance relativement élevée de cette antenne de réception. Ainsi dans un immeuble par exemple, le signal numérique reçu par une antenne de réception située sur un toit de cet immeuble peut être amplifié et réémis afin qu'un récepteur placé plusieurs étages en dessous puisse le recevoir grâce à une antenne incorporée. Cependant, une telle antenne de réception peut recevoir un nombre relativement important de signaux, notamment un signal numérique et un signal analogique relatifs à des programmes de télévision, ledit signal analogique et ledit signal numérique étant compris dans une même bande de fréquence UHF divisée en canaux. Par la suite, le terme « signal reçu sur l'antenne de réception » désignera un ensemble de signaux reçus par l'antenne de réception, notamment un signal numérique et un signal analogique relatifs à des programmes de télévision. Si l'on amplifie et réémet le signal reçu sur l'antenne de réception, le signal analogique compris dans le signal reçu sur l'antenne de réception sera amplifié et réémis. Or, un signal analogique ne peut être réémis à la même fréquence sans risque d'images fantômes, puisque le signal analogique ainsi réémis est déphasé, par rapport au signal analogique reçu sur l'antenne de réception, lorsque ces deux signaux parviennent sur un récepteur de signaux analogiques. Par conséquent, afin que la réémission locale isofréquence ne perturbe pas des utilisateurs de récepteurs de signaux analogiques, il est nécessaire d'éliminer le signal analogique reçu par l'antenne de réception avant d'effectuer la réémission. Une solution envisageable consiste à filtrer, dans la bande de fréquence UHF, le signal reçu sur l'antenne de réception grâce à des filtres passe-bande, afin de conserver uniquement le signal numérique. L'inconvénient d'une telle solution réside dans le fait que les canaux UHF utilisés pour la télévision numérique sont généralement adjacents aux canaux analogiques existants, ce qui implique que les filtres passe-bande requis doivent être relativement sélectifs et donc complexes. Pour résoudre ce problème, il a été envisagé de faire subir au signal reçu sur l'antenne de réception un changement de fréquence, ce qui conduit à une sélectivité requise des filtres moins grande. Cette solution est notamment adoptée dans un réémetteur domestique isofréquence commercialisé par TEKOTELECOM (page web : http://tekotelecom.it/products/dvbt/dvbrp.htm ). Cependant, un tel changement de fréquence nécessite des oscillateurs relativement stables et donc complexes, ce qui conduit, en outre, à un coût relativement élevé.

### EXPOSE DE L'INVENTION

Un but de l'invention est de proposer un réémetteur domestique simple à mettre en oeuvre et, par suite, de coût relativement faible.

Un dispositif de réémission selon l'invention et tel que défini dans le paragraphe d'ouverture est caractérisé en ce qu'il comprend :
- des moyens de sélection aptes à conserver une bande de fréquence correspondant audit signal numérique et audit signal analogique ;
- des moyens de filtrage aptes à éliminer au moins une fréquence parmi ladite pluralité de fréquences, à conserver au moins une fréquence parmi ladite pluralité de fréquences et à délivrer un signal filtré ;
- des moyens d'amplification aptes à amplifier ledit signal filtré et à délivrer un signal amplifié ;
- des moyens de réémission aptes à émettre ledit signal amplifié.

L'invention tire partie du fait que dans le spectre du signal analogique, il existe certaines fréquences qui peuvent être réémises sans perturber la qualité de réception au niveau d'un récepteur de signaux analogiques. C'est le cas notamment des fréquences porteuses de son, qui n'engendrent pas de perturbation perceptible lorsqu'elles sont réémises. Le signal reçu sur l'antenne de réception est tout d'abord filtré par des moyens de sélection, afin de conserver la bande de fréquence UHF. Les moyens de filtrage éliminent ensuite les fréquences qui, lorsqu'elles sont réémises, engendrent des perturbations sur un récepteur de signaux analogiques. Le signal filtré obtenu est ensuite amplifié puis réémis afin d'atteindre des récepteurs de signaux numériques situés à une distance relativement élevée de l'antenne de réception.

Préférentiellement, un dispositif de réémission tel que décrit ci-dessus est caractérisé en ce que ladite pluralité de fréquences comprend au moins une fréquence porteuse de vision et lesdits moyens de filtrage comprennent des moyens d'élimination aptes à éliminer la ou les fréquences porteuses de vision comprises dans ledit spectre.
En effet, ce sont les fréquences porteuses de vision qui provoquent des perturbations relativement grandes, lorsqu'elles sont réémises, au niveau d'un récepteur de signaux analogiques, les autres fréquences du signal analogique étant moins gênantes.

Dans une variante de réalisation, lesdits moyens d'élimination comprennent un nombre de filtres réjecteurs égal au nombre de fréquences porteuses de vision comprises dans ledit spectre, lesdits filtres réjecteurs étant placés en série et possédant chacun une fréquence de réjection différente égale à une des fréquences porteuses de vision.
Selon cette variante, une série limitée de filtres réjecteurs est utilisée pour filtrer le signal reçu sur l'antenne de réception, ce qui rend le dispositif de réémission relativement simple et peu coûteux.

De plus, préférentiellement, lesdits moyens de filtrage comprennent en outre des moyens de réglage de la ou des fréquences à éliminer.
Les fréquences à éliminer peuvent ainsi être réglées en fonction de la zone géographique où le dispositif de réémission est implanté. Ainsi, un tel dispositif de réémission est utilisable dans toutes les zones géographiques où des signaux numériques de type DVB-T coexistent avec des signaux analogiques.

Dans une variante de réalisation, lesdits moyens de réglage comprennent des moyens de calage automatique sur la ou les fréquences à éliminer. Ainsi, les fréquences effectivement éliminées par les moyens de filtrage correspondent aux fréquences que l'on désire éliminer. Un des avantages de tels moyens de calage réside dans le fait que, même en présence de dérives de certains composants électroniques des moyens de réglage, les fréquences éliminées restent bien celles que l'on désirait éliminer.

### BREVE DESCRIPTION DES FIGURES

L'invention sera mieux comprise et d'autres détails apparaîtront dans la description qui va suivre en regard des dessins annexés qui sont donnés à titre d'exemples non limitatifs et dans lesquels :
- la figure 1a est un schéma bloc illustrant des caractéristiques d'un dispositif de réémission selon l'invention et la figure 1b est un schéma bloc illustrant des moyens de filtrage préférentiels du dispositif de réémission de la figure 1a;
- la figure 2 illustre une partie d'un spectre d'un signal reçu par le dispositif de réémission de la figure 1a ;
- les figures 3a à 3c illustrent un principe de fonctionnement des moyens de filtrage de la figure 1b ;
- la figure 4 illustre des caractéristiques préférentielles des moyens de filtrage de la figure 1b et
- la figure 5 illustre une utilisation de dispositifs de réémission de la figure 1a dans un dispositif de télévision.

### EXPOSE DETAILLE D'AU MOINS UN MODE DE REALISATION DE L'INVENTION

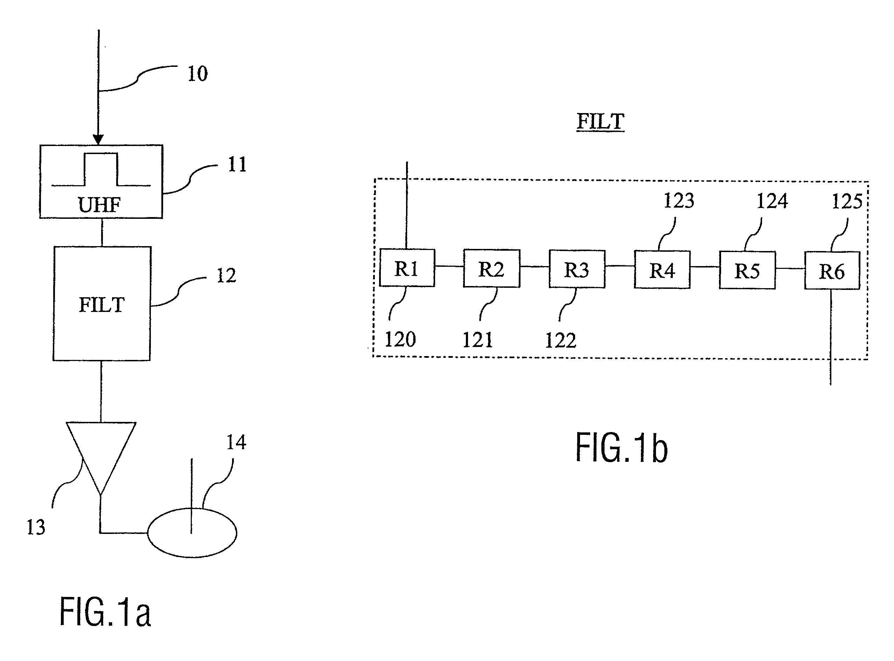

La figure 1a illustre un dispositif de réémission selon l'invention. Un tel dispositif de réémission comprend des moyens de sélection 11, des moyens de filtrage 12, des moyens d'amplification 13 et des moyens de réémission 14. Un signal principal 10 reçu sur une antenne de réception est filtré par les moyens de sélection 11 afin de conserver une partie de ce signal principal 10 située dans la bande de fréquence UHF. En effet, le signal principal 10 peut contenir, outre des fréquences de la bande UHF, des fréquences supplémentaires correspondant, par exemple, à une émission FM ou à une télécommunication GSM. Une amplification suivie d'une réémission de telles fréquences supplémentaires n'étant pas souhaitable, il est préférable d'éliminer de tels signaux, grâce aux moyens de sélection 11 qui peuvent être un filtre passe-bande de la bande de fréquence UHF, ladite bande étant comprise entre 470 et 860 mégahertz. Le signal principal 10 ainsi filtré est ensuite filtré par les moyens de filtrage 12, afin d'éliminer des fréquences dont la réémission provoque des perturbations dans une image projetée par un récepteur de signaux analogiques. Le signal obtenu est alors amplifié par les moyens d'amplification 13, puis réémis par les moyens d'émission 14.

La figure 1b illustre des moyens de filtrage 12 selon un mode préférentiel de l'invention. De tels moyens de filtrage 12 comprennent six filtres réjecteurs numérotés de 120 à 125, chacun possédant une fréquence de réjection. L'exemple considéré ici s'applique à une zone géographique, située par exemple en France, où six canaux analogiques sont utilisés pour diffuser des programmes de télévision analogique, chacun de ces canaux comprenant une fréquence porteuse de vision. Il existe des zones géographiques où le nombre de canaux analogiques utilisés est différent de six. Dans ce cas, le nombre de filtres réjecteurs à utiliser dans les moyens de filtrage 12 est égal au nombre de canaux analogiques utilisés. Chaque filtre réjecteur est réglé pour éliminer une fréquence porteuse de vision donnée, c'est à dire que la fréquence de réjection du filtre réjecteur 120 est égale à la fréquence porteuse de vision du premier canal utilisé, la fréquence de réjection du filtre réjecteur 121 est égale à la fréquence porteuse de vision du deuxième canal utilisé et ainsi de suite. Ainsi, la série des six filtres réjecteurs 120 à 125 permet d'éliminer toutes les fréquences porteuses de vision du signal analogique reçu sur l'antenne de réception.

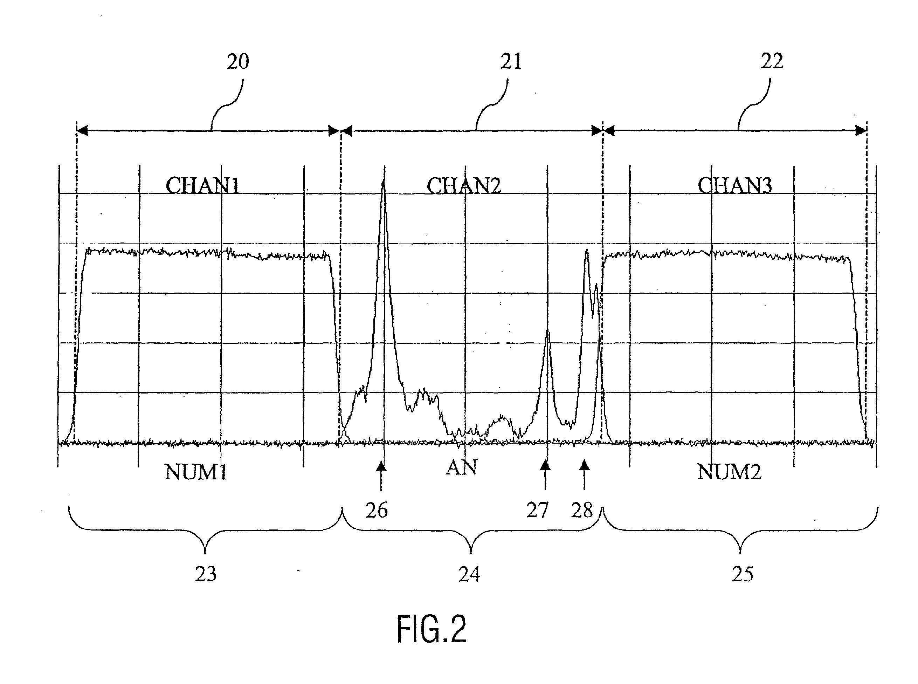

La figure 2 illustre une partie d'un spectre d'un signal principal 10 comprenant un signal analogique et un signal numérique. Cette partie représente une bande de fréquence correspondant à 3 canaux adjacents. Sur un premier canal 20 est diffusé une première composante numérique 23. Sur un deuxième canal 21 est diffusée une composante analogique 24. Sur un troisième canal 22 est diffusé une deuxième composante numérique 25. Il faut noter que l'on appelle 'signal analogique' l'ensemble des composantes analogiques, dans la bande de fréquence UHF, du signal principal 10 et signal numérique' l'ensemble des composantes numériques, dans la bande de fréquence UHF, du signal principal 10, une composante analogique correspondant à un programme de télévision, une composante numérique pouvant correspondre à plusieurs programmes de télévision. La composante analogique 24 comprend une fréquence porteuse de vision 26, une fréquence porteuse de chrominance 27 et une fréquence porteuse de son 28. Un canal correspond à une largeur spectrale de 8 mégahertz. Un écart spectral, c'est à dire une différence de fréquences, entre la fréquence porteuse de son 28 et la deuxième composante numérique 25 vaut environ 0,25 mégahertz, ce qui requiert des filtres relativement sélectifs si l'on désire filtrer le signal principal 10 pour ne conserver que le signal numérique. L'écart spectral entre la fréquence porteuse de vision 26 et la première composante numérique 23 vaut environ 1,25 mégahertz. Par conséquent, le fait d'éliminer uniquement la fréquence porteuse de vision 26 requiert des filtres moins sélectifs, donc moins coûteux.

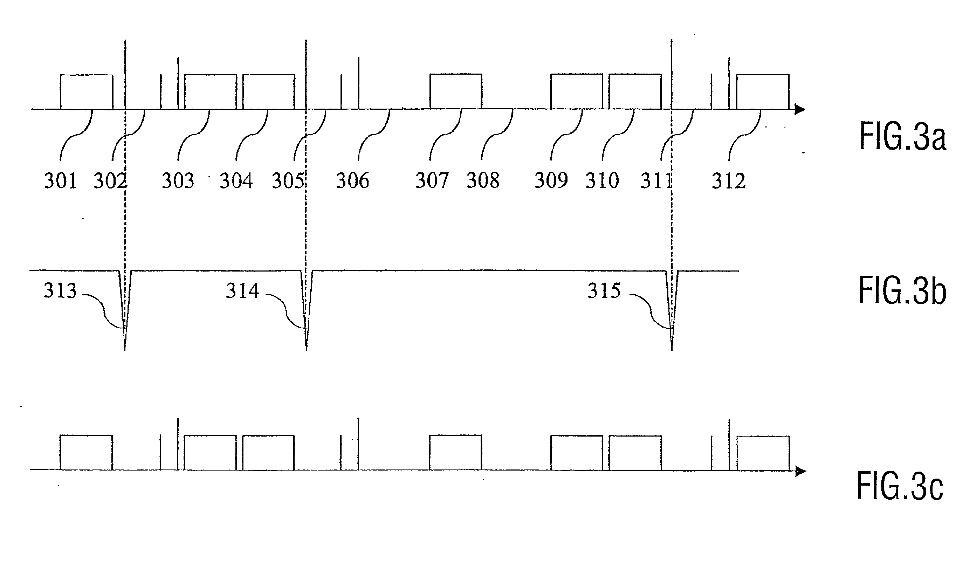

La figure 3a illustre schématiquement une partie d'un spectre d'un signal principal 10. Cette partie du spectre comprend douze canaux numérotés de 301 à 312. Les canaux 301, 303, 304, 307, 309, 310 et 312 sont des canaux numériques. Les canaux 302, 305 et 311 sont des canaux analogiques. Les canaux 306 et 308 ne sont pas utilisés. Sur chaque canal analogique est diffusée une composante analogique du signal analogique compris dans le signal principal 10. Chaque composante analogique comprend une fréquence porteuse de vision, une fréquence porteuse de chrominance et une fréquence porteuse de son, ces fréquences étant représentées schématiquement par des traits verticaux.

La figure 3b illustre schématiquement une fonction de transfert d'une série de trois filtres réjecteurs permettant d'éliminer les fréquences porteuses de vision des trois composantes analogiques du signal principal 10. La fréquence de réjection du premier filtre réjecteur est égale à la fréquence porteuse de vision de la composante analogique diffusée dans le canal 302, la fréquence de réjection du deuxième filtre réjecteur est égale à la fréquence porteuse de vision de la composante analogique diffusée dans le canal 305 et la fréquence de réjection du troisième filtre réjecteur est égale à la fréquence porteuse de vision de la composante analogique diffusée dans le canal 311. Il est possible d'utiliser des filtres dont la fréquence de réjection est réglable. Ces filtres comprennent des capacités variables, que l'on peut faire varier, par exemple avec des potentiomètres, afin de régler la fréquence de réjection. Il est également possible d'utiliser des filtres dont la fréquence de réjection est réglable à partir d'une interface graphique. De la sorte, un dispositif de réémission suivant l'invention peut être reliée à une interface graphique se présentant, par exemple, sous la forme d'un écran et d'un clavier. Ainsi, lors d'une installation d'un tel dispositif de réémission, par exemple dans un immeuble, un opérateur entre dans l'interface graphique, par l'intermédiaire du clavier, les fréquences porteuses de vision du signal analogique diffusé dans la zone géographique de l'immeuble, afin de régler chaque fréquence de réjection sur une des fréquences porteuses de vision.

La figure 3c illustre schématiquement un spectre d'un signal obtenu après filtrage par la série de trois filtres réjecteurs. Les trois fréquences porteuses de vision ont disparu. Il faut noter qu'il est possible, si c'est nécessaire, d'éliminer de la même façon d'autres fréquences des composantes analogiques, par exemple les fréquences de chrominance. Dans ce cas, il convient d'ajouter d'autres filtres réjecteurs dont les fréquences de réjection sont égales aux autres fréquences que l'on désire éliminer.

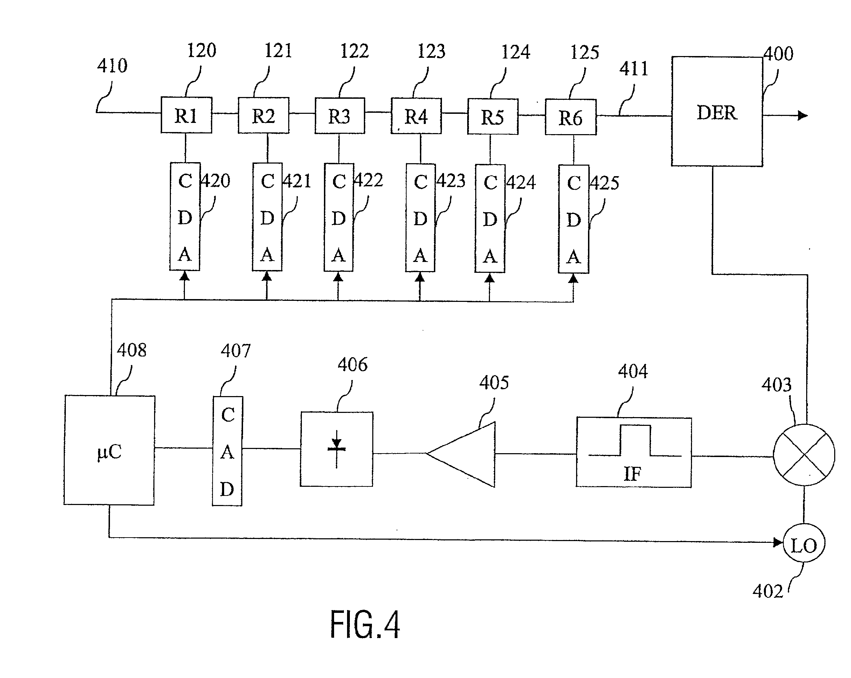

La figure 4 illustre un principe de fonctionnement des moyens de filtrage 12 comprenant, en outre, des moyens de calage automatique sur une fréquence à éliminer. De tels moyens de filtrage comprennent six filtres réjecteurs numérotés de 120 à 125, six convertisseurs numérique-analogique numérotés de 420 à 425, un dérivateur 400, un oscillateur local 402 possédant une fréquence d'accord contrôlée par un microcontrôleur 408, un mélangeur 403, un filtre passe-bande à bande passante étroite 404 accordé sur une fréquence intermédiaire, un amplificateur 405, un détecteur 406 et un convertisseur analogique-numérique 407. L'exemple considéré ici s'applique à une zone géographique où six canaux analogiques sont utilisés. Chacun des filtres réjecteurs 120 à 125 comprend des capacités variables permettant de faire varier sa fréquence de réjection en agissant sur une tension continue alimentant ces capacités variables. Pour le filtre réjecteur 120 par exemple, cette tension continue est obtenue par une instruction du microcontrôleur 408, via le convertisseur numérique-analogique 420. Un signal 410 est filtré par la série de filtres réjecteurs 120 à 125, pour fournir un signal filtré 411. Si l'on suppose qu'un installateur désire régler le filtre réjecteur 120 afin qu'il élimine la fréquence porteuse de vision d'un premier canal analogique du signal 410, l'installateur fournit, par l'intermédiaire d'une interface graphique par exemple, la valeur de cette fréquence porteuse de vision au microcontrôleur 408. Le microcontrôleur 408 envoie alors au convertisseur numérique-analogique 420 une instruction, afin que celui-ci délivre une tension continue destinée à régler la fréquence de réjection du filtre réjecteur 120 sur la fréquence porteuse de vision. Cependant, du fait de nombreux paramètres, telles des dérives des capacités variables, la fréquence effectivement rejetée par le filtre réjecteur 120 n'est pas exactement égale à la fréquence porteuse de vision que l'on désire éliminer. Le principe suivant permet de pallier cet inconvénient. Le dérivateur 400 prélève une partie, par exemple un centième de puissance, du signal filtré 411. Le microcontrôleur 408 envoie à l'oscillateur local 402 une instruction afin qu'il règle sa fréquence d'accord sur la différence entre la fréquence porteuse de vision indiquée par l'installateur et la fréquence intermédiaire du filtre passe-bande 404. La partie du signal filtré 411 prélevée par le dérivateur 400 traverse successivement le mélangeur 403, le filtre passe-bande 404, l'amplificateur 405 et le détecteur 406. On obtient, en sortie du détecteur 406, un niveau résiduel, représenté par une tension, de la porteuse de vision que l'on désire éliminer. Si la fréquence de réjection du filtre réjecteur 120 est proche de la fréquence porteuse de vision, ce niveau résiduel sera relativement faible. Mais si cette fréquence de réjection est éloignée de la fréquence porteuse de vision, le niveau résiduel sera relativement élevé. Par conséquent ce niveau résiduel est minimum lorsque la fréquence de réjection est la plus proche de la fréquence porteuse de vision à éliminer. Ainsi, le microcontrôleur 408 envoie des instructions au convertisseur numérique-analogique 420 afin de faire varier la tension continue délivrée par celui-ci, jusqu'à ce que le niveau résiduel à la sortie du convertisseur analogique-numérique 407 soit minimum. La tension continue obtenue lorsque le niveau résiduel est minimum est alors stockée dans une mémoire du microcontrôleur, non représentée. Il faut noter qu'un tel réglage peut être effectué plusieurs fois dans le temps, par exemple une fois par mois, pour tenir compte de dérives éventuelles des capacités variables. Cependant, seul un réglage effectué une première fois nécessite une intervention d'un installateur.
Le réglage des autres filtres réjecteurs 121 à 125 s'effectue de la même façon, en indiquant à chaque réglage la fréquence de vision que l'on désire éliminer.

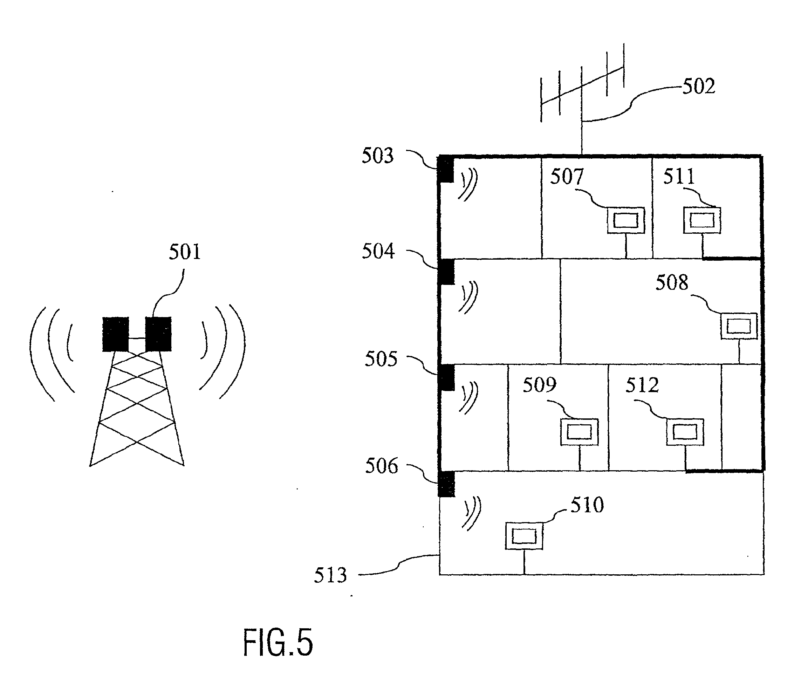

La figure 5 illustre une utilisation de dispositifs de réémission dans un dispositif de télévision. Un tel dispositif de télévision comprend une antenne d'émission 501, une antenne de réception 502, quatre dispositifs de réémission selon l'invention numérotés de 503 à 506, quatre récepteurs de signaux numériques numérotés de 507 à 510 et deux récepteurs de signaux analogiques 511 et 512. L'antenne de réception 502 reçoit un signal émis par l'antenne d'émission 501 et d'éventuels autres émetteurs proches. Le signal reçu sur l'antenne de réception comprend, entre autres, un signal numérique et un signal analogique relatifs à des programmes de télévision. Dans l'exemple considéré ici, un dispositif de réémission a été installé à chaque étage d'un immeuble 513. D'autres configurations peuvent être envisagées, par exemple l'installation d'un seul dispositif de réémission pour tout l'immeuble 513, ou bien d'un seul dispositif de traitement selon l'invention, couplé à plusieurs antennes de réémission. Les configurations envisageables dépendent de nombreux paramètres, par exemple de dimensions de l'immeuble 513 ou de matériaux de construction. Les quatre dispositifs de réémission 503 à 506 reçoivent le signal de l'antenne de réception 502 grâce à un câble, représenté en traits épais sur cette figure, qui peut être le câble utilisé classiquement pour transporter le signal analogique reçu par l'antenne de réception 502. Les deux récepteurs de signaux analogiques 511 et 512 sont reliés à l'antenne de réception par ce même câble. Grâce aux moyens de filtrage compris dans les dispositifs de réémission selon l'invention 503 à 506, l'image projetée par les deux récepteurs de signaux analogiques 511 et 512 n'est pas perturbée par la réémission isofréquence du signal reçu sur l'antenne de réception 502.

La description ci-dessus en référence aux figures illustre l'invention plutôt qu'elle ne la limite. A cet égard, quelques remarques sont faites ci-dessous.

La description des figures s'appuie sur l'exemple du standard DVB-T décrit dans la norme ETS 300744. L'invention s'applique à d'autres standards de télévision numérique, éventuellement plus évolués, dès lors que des signaux numériques et des signaux analogiques sont amenés à coexister et que la réémission isofréquence des signaux numériques est possible sans perturber les images correspondant à ces signaux numériques.

Sur la figure 5, un dispositif de télévision est décrit. Il est possible de décliner ce mode, sans s'éloigner de l'esprit de l'invention. Par exemple, un dispositif de réémission pourra être installé dans une maison, comportant éventuellement plusieurs récepteurs de signaux numériques. Un dispositif de réémission pourra également servir de relais pour transporter le signal numérique dans une zone géographique mal desservie par l'antenne d'émission 501, par exemple en raison d'obstacles telles des montagnes. Dans un tel cas, le dispositif de réémission pourra être installé sur une antenne secondaire.

Un dispositif de réémission selon l'invention peut être utilisé dans un réseau de communication comprenant au moins un émetteur apte à envoyer des signaux représentant au moins une image, un réseau de transmission, et un récepteur apte à recevoir lesdits signaux.

Le verbe « comprendre » et ses conjugaisons doivent être interprétés de façon large, c'est à dire comme n'excluant pas la présence non seulement d'autres éléments que ceux listés après ledit verbe, mais aussi d'une pluralité d'éléments déjà listés après ledit verbe et précédés du mot « un » ou « une »

## Revendications

1. Dispositif de réémission d'un signal comprenant au moins :
- un signal numérique relatif à au moins un programme de télévision numérique terrestre et
- un signal analogique relatif à au moins un programme de télévision analogique terrestre, ledit signal analogique présentant un spectre comprenant une pluralité de fréquences,
**caractérisé en ce que** ledit dispositif de réémission comprend au moins:
- des moyens de sélection aptes à conserver une bande de fréquence correspondant audit signal numérique et audit signal analogique ;
- des moyens de filtrage aptes à éliminer au moins une fréquence parmi ladite pluralité de fréquences, à conserver au moins une fréquence parmi ladite pluralité de fréquences et à délivrer un signal filtré ;
- des moyens d'amplification aptes à amplifier ledit signal filtré et à délivrer un signal amplifié ;
- des moyens de réémission aptes à émettre ledit signal amplifié.

2. Dispositif de réémission d'un signal selon la revendication 1,
**caractérisé en ce que** :
- ladite pluralité de fréquences comprend au moins une fréquence porteuse de vision ;
- lesdits moyens de filtrage comprennent des moyens d'élimination aptes à éliminer la ou les fréquences porteuses de vision comprises dans ledit spectre.

3. Dispositif de réémission d'un signal selon la revendication 2,
**caractérisé en ce que** lesdits moyens d'élimination comprennent un nombre de filtres réjecteurs égal à un nombre de fréquences porteuses de vision comprises dans ledit spectre, lesdits filtres réjecteurs étant placés en série et possédant chacun une fréquence de réjection différente égale à une des fréquences porteuses de vision.

4. Dispositif de réémission d'un signal selon la revendication 1,
**caractérisé en ce que** lesdits moyens de filtrage comprennent en outre des moyens de réglage de la ou des fréquences à éliminer.

5. Dispositif de réémission d'un signal selon la revendication 4,
**caractérisé en ce que** lesdits moyens de réglage comprennent des moyens de calage automatique sur la ou les fréquences à éliminer.

6. Dispositif de traitement d'un signal comprenant
- un signal numérique relatif à au moins un programme de télévision numérique terrestre et
- un signal analogique relatif à au moins un programme de télévision analogique terrestre, ledit signal analogique présentant un spectre comprenant une pluralité de fréquences,
**caractérisé en ce que** ledit dispositif de traitement comprend des moyens de filtrage aptes à éliminer au moins une fréquence parmi ladite pluralité de fréquences et à conserver au moins une fréquence parmi ladite pluralité de fréquences.

7. Dispositif de traitement d'un signal selon la revendication 6,
**caractérisé en ce que** :
- ladite pluralité de fréquences comprend au moins une fréquence porteuse de vision ;
- lesdits moyens de filtrage comprennent des moyens d'élimination aptes à éliminer la ou les fréquences porteuses de vision comprises dans ledit spectre.

8. Dispositif de traitement d'un signal selon la revendication 7,
**caractérisé en ce que** lesdits moyens d'élimination comprennent un nombre de filtres réjecteurs égal à un nombre de fréquences porteuses de vision comprises dans ledit spectre, lesdits filtres réjecteurs étant placés en série et possédant chacun une fréquence de réjection différente égale à une des fréquences porteuses de vision.

9. Dispositif de traitement d'un signal selon la revendication 6,
**caractérisé en ce que** lesdits moyens de filtrage comprennent en outre des moyens de réglage de la ou des fréquences à éliminer.

10. Dispositif de traitement d'un signal selon la revendication 9,
**caractérisé en ce que** lesdits moyens de réglage comprennent des moyens de calage automatique sur la ou les fréquences à éliminer.

11. Réseau de communication comprenant au moins un émetteur apte à envoyer des signaux représentant au moins une image, un réseau de transmission, un récepteur apte à recevoir les dits signaux et un dispositif de réémission selon la revendication 1.
